(19) Europäisches Patentamt
European Patent Office
Office européen des brevets

(11) **EP 4 763 886 A1**

(12) **EUROPEAN PATENT APPLICATION**

(43) Date of publication:
**24.06.2026 Bulletin 2026/26**

(21) Application number: **24383436.3**

(22) Date of filing: **20.12.2024**

(51) International Patent Classification (IPC):
***C08G 65/336*** *(2006.01)* ***C08G 77/38*** *(2006.01)*
***C08G 77/46*** *(2006.01)* ***C09D 171/02*** *(2006.01)*
***C09D 183/12*** *(2006.01)*

(52) Cooperative Patent Classification (CPC):
**C08G 77/46; C08G 65/336; C08G 77/38; C09D 171/02; C09D 183/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fundación Cidetec**
**20014 Donostia-San Sebastián (ES)**

(72) Inventors:
- **KOSTA PÉREZ, Ivet**
  **20014 DONOSTIA-SAN SEBASTIÁN (ES)**
- **FENERO BISQUER, Marta**
  **20014 SAN SEBASTIÁN (ES)**
- **ITURRI RAMOS, Jagoba Jon**
  **20014 DONOSTIA-SAN SEBASTIÁN (ES)**

(74) Representative: **ZBM Patents - Zea, Barlocci & Markvardsen**
**Rambla de Catalunya, 123**
**08008 Barcelona (ES)**

(54) **FLUORINE FREE WATERBORNE COATING WITH EASY TO CLEAN PROPERTIES**

(57) It relates to a water-soluble polymer suitable for coating a substrate which comprises i) a silicone-based moiety comprising a repetitive unit of formula (I), wherein each R is independently $(C_1\text{-}C_{30})$alkyl or $(C_3\text{-}C_{10})$cycloalkyl; and n is a value from 1 to 200; and ii) a hydrophilic polymer moiety which comprises one or more functional groups capable of forming one or more chemical bonds with a substrate; wherein the silicone-based moiety and the hydrophilic polymer moiety are covalently attached. It also relates to a process for the preparation of the water-soluble polymer, to a composition comprising it, to the use of the composition for coating a substrate and a process for coating the substrate, as well as to a substrate coated with the composition.

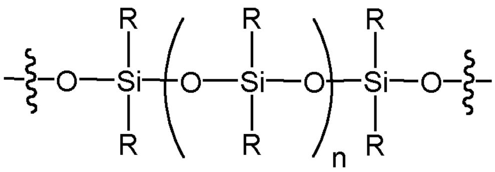

(I)

EP 4 763 886 A1

## Description

### Technical Field

The present invention relates to the field of chemistry, more particularly to coating materials. In particular, the invention relates to a waterborne easy to clean composition based on a modified silicone and to the process for its preparation. The invention also relates to the use of the compositions to coat a variety of substrates.

### Background Art

The development of coatings with easy release properties has gained significant attention due to their ability to repel both water and oils, making them highly desirable for applications in self-cleaning surfaces, anti-fouling, and protective coatings.

Among the materials used for these coatings, polydimethylsiloxane (PDMS), a silicone-based polymer, and their derivatives, stands out for its versatility. PDMS exhibits remarkable low surface energy and therefore good hydrophobic properties. In addition, it shows flexibility and optical transparency. These properties, combined with its biocompatibility and ease of processing, make PDMS a popular choice for developing advanced coatings across a variety of industries.

However, while PDMS offers several desirable properties, it also presents notable drawbacks. Solubilization of polydimethylsiloxane (PDMS) in water can be challenging due to its hydrophobic nature. Current solutions based on PDMS silicones as precursors for protective functional materials are obtained in organic solvents. Regulatory agencies are increasingly restricting the use of these chemicals, creating an urgent need for alternatives.

In the state of art there are different approaches to solubilize PDMS. However, these approaches may involve the use of complex techniques such as for example a plasma pretreatment in air to produce PDMS molecules encapsulated in water resulting in the formation of a homogeneous solution.

Alternative approaches to make the PDMS coatings water soluble result in coatings that are not anchored to the substrate. This may lead to poor adhesion and subsequent delamination or degradation over time.

To achieve proper adhesion, PDMS-based coatings usually rely on solvent-based formulations. This dependence on organic solvents such as volatile organic compounds (VOCs) during the coating process introduces further challenges since it contributes to air pollution, poses health risks, and makes it difficult regulatory compliance. Furthermore, solvent-based systems can limit compatibility with certain substrates and increase overall production costs due to handling and disposal requirements.

Therefore, from what is known in the art, there is still the need of providing alternative coatings with suitable easy to clean properties that overcome the drawbacks of the prior art.

### Summary of Invention

The inventors have developed waterborne coating compositions that comprise a water-soluble polymer derived from two key components: (i) a silicone-based polymer, such as bis(3-aminopropyl)-terminated PDMS, and (ii) a hydrophilic polymer, such as poly(ethylene glycol) diglycidyl ether (PEGDGE). Both polymers are functionalized with reactive groups, particularly epoxy and amino groups, enabling them to react with each other and form covalent bonds, as confirmed by Fourier transform infrared spectroscopy (FTIR) measurements (FIG. 1) in the examples provided below. Additionally, the hydrophilic polymer contains further functional groups, particularly epoxy groups, that are able to form chemical bonds with a substrate, enhancing the adhesion of the polymer to the substrate surface.

Surprisingly, the inventors found that the coating compositions of the invention have high static contact angles in water and moderate contact angles in hexadecane, which means that the coatings have excellent hydrophobic and moderate oleophobic properties. In addition, the low sliding angles in both water and hexadecane are indicative of low adhesion to water and non-polar substances such as oils. As a result, water and oil droplets, along with dirt particles or contaminants, can be wiped off from the substrate with minimal inclination or effort, showcasing the easy-to-clean properties of the invention's coatings.

These results were quite unexpected as the inventors would have expected the presence of the hydrophilic polymer to deteriorate the properties of the coatings. However, on the contrary, no such deterioration was observed. Rather, the resulting coatings, particularly based on PDMS and PEGDGE, exhibited the typical properties of the prior art PDMS coatings with the advantage of being waterborne and have improved adhesion properties.

Furthermore, the coatings of the invention show good mechanical properties, especially improved abrasion and ageing resistance. As shown in the examples below, after 100 cycles applying a pressure of 2.62 KPa, the contact angle values measured for the coatings of the invention remained constant demonstrating the mechanical robustness of the coating. Likewise, the wettability properties after 300 h of exposure to UV radiation showed similar values to those obtained before starting the ageing test.

A further advantage of the coatings of the invention is that their fabrication can be easily carried out by using conventional techniques such as dip-coating, bar-coating, spin-coating, spraying and the like.

Thus, a first aspect of the invention relates to a water-soluble polymer suitable for coating a substrate which comprises:

i) a silicone-based moiety comprising a repetitive unit of formula (I)

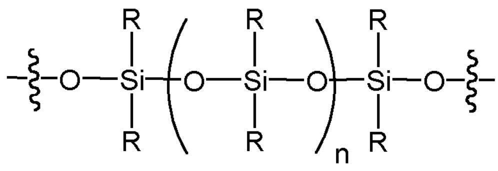

(I)

wherein each R is independently $(C_1\text{-}C_{30})$alkyl or $(C_3\text{-}C_{10})$cycloalkyl; and n is a value from 1 to 200; and
ii) a hydrophilic polymer moiety which comprises one or more functional groups capable of forming one or more chemical bonds with a substrate;

wherein the silicone-based moiety and the hydrophilic polymer moiety are covalently attached.

A second aspect of the invention relates to a process for the preparation of the water-soluble polymer as defined herein, which comprises:

a) providing a silicone-based polymer comprising the repetitive unit of formula (I) as defined herein, and one or more functional groups capable of forming one or more covalent bonds with a hydrophilic polymer;
b) providing a hydrophilic polymer which comprises one or more functional groups capable of forming one or more covalent bonds with a silicone-based polymer, and one or more functional groups capable of forming one or more chemical bonds with a substrate; and
c) mixing the silicone-based polymer of step a) and the hydrophilic polymer of step b) in the presence of water until one or more covalent bonds between the silicone-based polymer of step a) and the hydrophilic polymer of step b) are formed.

A third aspect of the invention relates to a composition comprising the water-soluble polymer as defined herein, and optionally one or more carriers or additives.

A fourth aspect of the invention relates to the use of the composition as defined herein for coating at least part of a substrate.

A fifth aspect of the invention relates to a process for coating a substrate which comprises applying the composition as defined herein to at least part of a substrate.

**Brief Description of Drawings**

FIG. 1 shows ATR-FTIR spectrum of a solution of PEGDGE-PDMS (1.5 mL PEGDGE/0.5 mL $NH_2$-PDMS-$NH_2$ 50-60 cSt) solution.

**Detailed description of the invention**

All terms as used herein in this application, unless otherwise stated, shall be understood in their ordinary meaning as known in the art. Other more specific definitions for certain terms as used in the present application are as set forth lower than and are intended to apply throughout the description and claims.

For the purposes of the present invention, all given ranges include both the lower and the upper endpoints of the range. Ranges given, such as temperatures, times, weights, and the like, should be considered approximate, unless specifically stated.

As used herein, the indefinite articles "a" and "an" are synonymous with "at least one" or "one or more." Unless indicated otherwise, definite articles used herein, such as "the," also include the plural of the noun.

The terms "coating composition" refers to a composition that is applied onto a substrate as a protective layer, a functional layer, an aesthetic layer, or combinations thereof, and may increase the durability or extend the useful life of the resulting product.

The term $-(C_1\text{-}C_n)$alkyl (wherein n is e.g. 30, 15 or 6) refers to a saturated branched or linear hydrocarbon chain

which contains from 1 to n (e.g. 30, 15 or 6) carbon atoms and only single bonds. Non-limiting examples of -($C_1$-$C_n$)alkyl groups include methyl, ethyl, propyl, isopropyl, butyl, isobutyl, sec-butyl, tert-butyl, pentyl, or hexyl. The term -O($C_1$-$C_n$) alkyl refers to an alkoxy group, wherein the alkyl part is as previously defined. Non-limiting examples of -O($C_1$-$C_n$)alkyl groups include methoxy, ethoxy, propoxy, isopropoxy, butoxy, or isobutoxy.

The term -($C_3$-$C_{10}$)cycloalkyl refers to a saturated carbocyclic ring system which may be monocyclic or bicyclic and which contains from 3 to 10 carbon atoms. Examples include cyclopropane, cyclobutane, cyclopentane, cyclohexane or cyclooctane. As used herein, a wavy line "∿∿∿∿" that intersects a bond in any chemical structure disclosed herein represent a point of attachment to the remainder of the molecule.

The term "wettability" as used herein refers to the ability of a liquid to maintain contact with a solid surface, and it is controlled by the balance between intermolecular interactions of adhesive type (liquid to surface) and cohesive type (liquid to liquid). This ability should be characterized in terms of the static and the dynamic behaviour of the liquid deposited on the surface.

The term "static contact angle" of a droplet of a liquid resting on a solid surface as used herein refers to the angle between the tangent to the solid-liquid interface and the solid surface at the three-phase contact line (i.e. where the three phases of the system: liquid, solid and vapor coexist). It is a measure of the wettability of a substrate by a liquid and can be quantified by the Laplace-Young fitting method, for example as disclosed in Hoorfar, M. et al. (Advances in colloid and interface science 2006).

The term "sliding angle" as used herein refers to the critical angle at which a liquid droplet overcomes the adhesive forces that bind it to a surface and begins to slide and can be correlated to the ease of cleaning that surface. The droplet volume required for measurement was determined to be 10 $\mu$L. The sliding angle of the coating may be measured according to the tilting plate direct method for example as disclosed in Huhtam6ki, T. et al. (Nature protocols 2018) in which the contact angles are measured from the leading edge and the trailing edge of a distorted drop on an inclined plane when the drop starts sliding. The tilt angle at which the drop starts sliding is called 'sliding angle' and is a measure of droplet mobility.

The term "abrasion resistance" as used herein refers to the ability of a surface to resist being worn away by rubbing or friction.

The expression "functional group capable of forming chemical bonds with a substrate" refers to a group, typically an epoxide group or an alkoxysilane group that when it is contacted with the surface of the substrate it forms a covalent bond. Thus, for example an epoxide group or the alkoxysilane may react with a -OH group present on the surface of a substrate and form ether or -Si-O- covalent bonds.

The expression "functional group capable of forming covalent bonds" with a hydrophilic polymer or with a silicone-based polymer refers to a functional group that when contacted with another appropriate functional group may react with it and form a covalent bond. Appropriate functional groups may be an epoxide group, a hydroxy group, an amino group or an alkoxysilane group. Thus, for example an epoxide group may react with an amine group, or an alkoxysilane group may react with another alkoxysilane group and form covalent bonds.

The terms "molecular weight", "average molecular weight" and "Mw" have the same meaning and are used herein interchangeably. The molecular weight is calculated by the following equation:

$$\bar{M}_w = \frac{\sum_i N_i M_i^2}{\sum_i N_i M_i}$$

where Ni is the number of molecules of molecular mass Mi. The mass average molecular mass can be determined by light scattering, size exclusion chromatography (SEC), and sedimentation velocity.

The expression "obtainable by" is used herein for defining a product (e.g., the water-soluble polymer) by its preparation process and refers to the product that can be obtained through the preparation process disclosed herein. For the purposes of the invention, the expressions "obtainable", "obtained" and similar equivalent expressions are used interchangeably and, in any case, the expression "obtainable" encompasses the expression "obtained".

## Water-soluble polymer

As mentioned above, a first aspect of the invention relates to a water-soluble polymer suitable for coating a substrate which comprises:

i) a silicone-based moiety comprising a repetitive unit of formula (I)

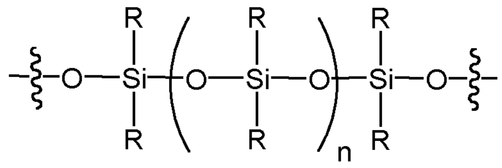

(I)

wherein each R is independently ($C_1$-$C_{30}$)alkyl or ($C_3$-$C_{10}$)cycloalkyl; and n is a value from 1 to 200; and

ii) a hydrophilic polymer moiety which comprises one or more functional groups capable of forming one or more chemical bonds with a substrate;

wherein the silicone-based moiety and the hydrophilic polymer moiety are covalently attached.

In one embodiment, optionally in combination with any of the embodiments above or below, in the silicone-based moiety comprising the repetitive unit of formula (I), each R is ($C_1$-$C_{20}$)alkyl, more particularly ($C_1$-$C_6$)alkyl, even more particularly each R is methyl. In one embodiment, optionally in combination with any of the embodiments above or below, in the silicone-based moiety comprising the repetitive unit of formula (I), each R is ($C_1$-$C_{30}$)alkyl, or ($C_1$-$C_{25}$)alkyl, or ($C_1$-$C_{20}$) alkyl, or ($C_1$-$C_{15}$)alkyl, or ($C_1$-$C_{10}$)alkyl, or ($C_1$-$C_6$)alkyl, or ethyl or methyl.

In another embodiment, optionally in combination with any of the embodiments above or below, in the silicone-based moiety comprising the repetitive unit of formula (I), n is a value from 1 to 150, more particularly from 1 to 95, even more particularly from 2 to 15. In another embodiment, optionally in combination with any of the embodiments above or below, in the silicone-based moiety comprising the repetitive unit of formula (I), n is about 1, or about 2, or about 5, or about 10, or about 15, or about 20, or about 30, or about 40, or about 50, or about 60, or about 70, or about 80, or about 90, or about 92, or about 95, or about 100, or about 120, or about 130, or about 140, or about 150, or about 160, or about 170, or about 180 or about 190, or about 200.

In another embodiment, optionally in combination with any of the embodiments above or below, the hydrophilic polymer moiety comprises a poly($C_1$-$C_{20}$)alkylene glycol moiety, more particularly a poly($C_1$-$C_{10}$)alkylene glycol moiety, even more particularly a poly($C_1$-$C_6$)alkylene glycol moiety, and even still more polyethylene glycol moiety or a propylene glycol moiety; or a polyglycerol moiety.

In another embodiment, optionally in combination with any of the embodiments above or below, the hydrophilic polymer moiety comprises a moiety of formula (IX):

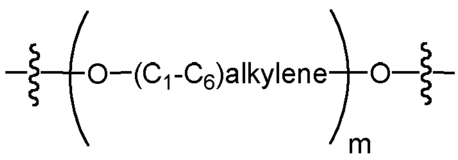

(IX)

wherein m is a value from 1 to 1000. More particularly the ($C_1$-$C_6$)alkylene is ethylene or propylene, even more particularly is ethylene.

In a more particular embodiment, optionally in combination with any of the embodiments above or below, in the moiety of formula (IX), m is a value from 1 to 1000, more particularly from 1 to 500, even more particularly from 1 to 20, and even still more particularly from 2 to 10. In another embodiment, optionally in combination with any of the embodiments above or below, in the moiety of formula (IX), m is about 1, or about 2, or about 10, or about 15, or about 20, or about 25, or about 30, or about 50, or about 100, or about 200, or about 300, or about 400, or about 500, or about 600, or about 700, or about 800, or about 900, or about 1000.

In another embodiment, optionally in combination with any of the embodiments above or below, the hydrophilic polymer moiety comprises a polyglycerol moiety of formula (X):

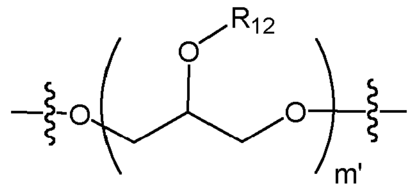

(X)

wherein m' is a value from 1 to 100.

In a more particular embodiment, optionally in combination with any of the embodiments above or below, in the polyglycerol moiety of formula (X), m' is a value from 1 to 100, more particularly from 1 to 10. In another embodiment, optionally in combination with any of the embodiments above or below, in the moiety of formula (IX), m' is about 1, or about 2, or about 5, or about 10, or about 15, or about 20, or about 25, or about 30, or about 40, or about 50, or about 60, or about 70, or about 80, or about 90, or about 100.

In another embodiment, optionally in combination with any of the embodiments above or below, in the hydrophilic polymer moiety, the one or more functional groups capable of forming one or more chemical bonds with a substrate are independently selected from the group consisting of a radical of formula (II) and a radical of formula (III):

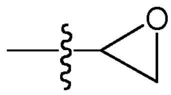

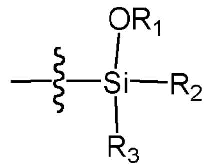

(II) (III)

wherein $R_1$ is H or ($C_1$-$C_6$)alkyl; $R_2$ and $R_3$ are independently selected from the group consisting of H, -OH and -O-($C_{1-}C_6$) alkyl; and wherein the one or more functional groups capable of forming one or more chemical bonds with a substrate are attached to the hydrophilic polymer moiety either directly by a bond or through a ($C_1$-$C_{15}$)alkylene group. More particularly, in the radical of formula (III) at least one of $R_2$ or $R_3$ is -OH or -O-($C_{1-}C_6$)alkyl, even more particularly, both $R_2$ and $R_3$ are -OH or -O-($C_{1-}C_6$)alkyl, even more particularly -$OR_1$, $R_2$ and $R_3$ are the same.

In another embodiment, optionally in combination with any of the embodiments above or below, in the hydrophilic polymer moiety, the one or more functional groups capable of forming one or more chemical bonds with a substrate are of formula (II) and are attached to the hydrophilic polymer moiety either directly by a bond or through a ($C_1$-$C_{15}$)alkylene group.

In another embodiment, optionally in combination with any of the embodiments above or below, in the hydrophilic polymer moiety, the one or more functional groups capable of forming one or more chemical bonds with a substrate are of formula (II) and are attached to the hydrophilic polymer moiety directly by a bond.

In another embodiment, optionally in combination with any of the embodiments above or below, in the hydrophilic polymer moiety, the one or more functional groups capable of forming one or more chemical bonds with a substrate are of formula (II) and are attached to the hydrophilic polymer moiety through a ($C_1$-$C_{15}$)alkylene group, more particularly a ($C_1$-$C_{10}$)alkylene group, even more particularly through a ($C_1$-$C_6$)alkylene group, and even still more particularly a methylene group.

In another embodiment, optionally in combination with any of the embodiments above or below, the hydrophilic polymer moiety and the silicone-based moiety are covalently attached through one or more biradicals selected from the group consisting of formula (IV), formula (V), formula (VI), formula (VII) and a combination thereof:

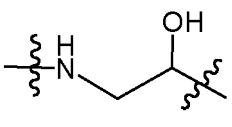

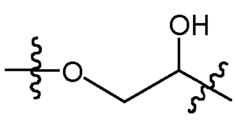

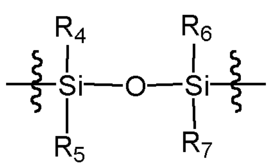

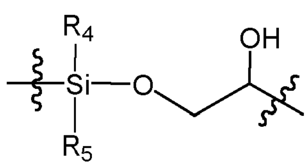

(IV) (V) (VI) (VII)

wherein each $R_4$ and $R_5$, $R_6$ and $R_7$ are independently selected from the group consisting of H, -OH and -O-($C_{1-}C_6$)alkyl;

and wherein one of the ends of each biradical is attached to the hydrophilic polymer moiety, and the other end of the biradical is attached to the silicone-based moiety; and each biradical is attached to the hydrophilic polymer moiety or the silicone-based moiety either directly by a bond or through a ($C_1$-$C_6$)alkylene group.

More particularly, in the radical of formula (VI) at least one of $R_4$ or $R_5$ is -OH or -O-($C_1$-$C_6$)alkyl, and at least one of $R_6$ or $R_7$ is -OH or -O-($C_1$-$C_6$)alkyl. Even more particularly, $R_4$, $R_5$, $R_6$ and $R_7$ are -OH or -O-($C_1$-$C_6$)alkyl, even more particularly $R_4$, $R_5$, $R_6$ and $R_7$ are the same.

Also more particularly, in the radical of formula (VII) at least one of $R_4$ or $R_5$ is -OH or -O-($C_1$-$C_6$)alkyl. Even more particularly, both $R_4$ and $R_5$ are -OH or -O-($C_1$-$C_6$)alkyl, even more particularly $R_4$ and $R_5$ are the same.

In another embodiment, optionally in combination with any of the embodiments above or below, each biradical selected from the group consisting of formula (IV), formula (V), formula (VI), and formula (VII) is attached to the hydrophilic polymer moiety by one of its ends through a ($C_1$-$C_6$)alkylene group, particularly a methylene group, an ethylene or a propylene group, and is attached to the silicone-based moiety by the other of its ends through a ($C_1$-$C_6$)alkylene group particularly a methylene, an ethylene or a propylene group.

In another embodiment, optionally in combination with any of the embodiments above or below, each biradical selected from the group consisting of formula (IV), formula (V), formula (VI), and formula (VII) is attached to the hydrophilic polymer moiety by one of its ends directly through a bond, and is attached to the silicone-based moiety by the other of its ends directly through a bond.

In another embodiment, optionally in combination with any of the embodiments above or below, the hydrophilic polymer moiety and the silicone-based moiety are covalently attached through one or more biradicals of formula (IV), wherein one of the ends of each biradical, particularly the nitrogen atom, is attached to the hydrophilic polymer moiety, and the other end of the biradical, particularly the carbon atom attached to the hydroxyl group, is attached to the silicone-based moiety, and wherein the biradical of formula (IV) is attached to the hydrophilic polymer moiety or the silicone-based moiety either directly by a bond or through a ($C_1$-$C_6$)alkylene group, particularly through a methylene group, an ethylene or a propylene group.

In another embodiment, optionally in combination with any of the embodiments above or below, the hydrophilic polymer moiety and the silicone-based moiety are covalently attached through one or more biradicals of formula (V), wherein one of the ends of each biradical, particularly the nitrogen atom, is attached to the hydrophilic polymer moiety, and the other end of the biradical, particularly the carbon atom attached to the hydroxyl group, is attached to the silicone-based moiety, and wherein the biradical of formula (IV) is attached to the hydrophilic polymer moiety or the silicone-based moiety either directly by a bond or through a ($C_1$-$C_3$)alkylene group, particularly a methylene group, an ethylene or a propylene group.

In another embodiment, optionally in combination with any of the embodiments above or below, the water-soluble polymer of the first aspect comprises a silicone-based moiety comprising a repetitive unit of formula (I) and two hydrophilic polymer moieties, wherein one hydrophilic polymer moiety is attached to one of the ends of the repetitive unit of formula (I) and the other hydrophilic polymer moiety is attached to the other of the ends of the repetitive unit of formula (I). More particularly, each hydrophilic polymer moiety is attached to the repetitive unit of formula (I) of the silicone-based moiety through a biradical selected from the group consisting of formula (IV'), formula (V'), formula (VI'), and formula (VII'):

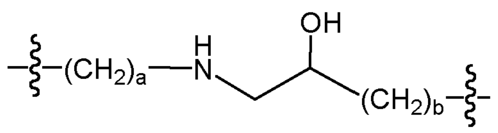

(IV')

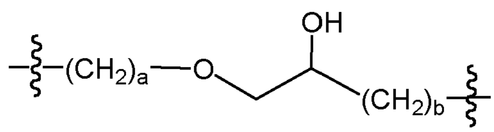

(V')

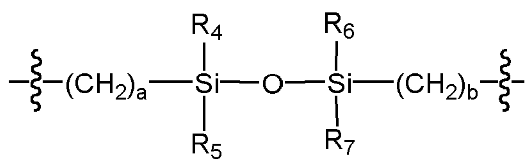

(VI')

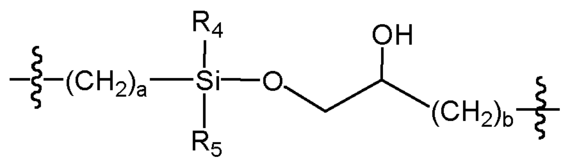

(VII')

wherein each $R_4$ and $R_5$, $R_6$ and $R_7$ are independently selected from the group consisting of H, -OH and -O-($C_1$-$C_6$)alkyl; and each a and b are independently a value from 0 to 6,; and wherein one of the ends of each biradical is attached to a hydrophilic moiety and the other end of the biradical is attached to one of the ends of the repetitive unit of formula (I).

More particularly, in the radical of formula (VI') at least one of $R_4$ or $R_5$ is -OH or -O-($C_1$-$C_6$)alkyl, and at least one of

$R_6$ or $R_7$ is -OH or -O-($C_1$-$C_6$)alkyl. Even more particularly, $R_4$, $R_5$, $R_6$ and $R_7$ are -OH or -O-($C_1$-$C_6$)alkyl, even more particularly $R_4$, $R_5$, $R_6$ and $R_7$ are the same.

Also more particularly, in the radical of formula (VII') at least one of $R_4$ or $R_5$ is -OH or -O-($C_1$-$C_6$)alkyl. Even more particularly, both $R_4$ and $R_5$ are -OH or -O-($C_1$-$C_6$)alkyl, even more particularly $R_4$ and $R_5$ are the same.

In another more embodiment, optionally in combination with any of the embodiments above or below, in the radicals of formula (IV'), formula (V'), formula (VI'), and formula (VII'), a and b are independently a value from 0 to 3. In another embodiment a and b are independently 0, 1, 2, 3, 4, 5 or 6.

In another embodiment, optionally in combination with any of the embodiments above or below, the water-soluble polymer of the first aspect comprises a silicone-based moiety comprising a repetitive unit of formula (I) and two equal hydrophilic polymer moieties.

The embodiments mentioned herein for the biradicals of formulas (IV), (V), (VI) and (VII) also apply to the biradicals of formulas (IV'), (V'), (VI') and (VII').

In another embodiment, optionally in combination with any of the embodiments above or below, the water-soluble polymer of the first aspect has a molecular weight from 700 to 10000 Da, more particularly from 700 to 6000 Da.

In another embodiment, optionally in combination with any of the embodiments above or below, the water-soluble polymer of the invention, which has the formula (VIII)

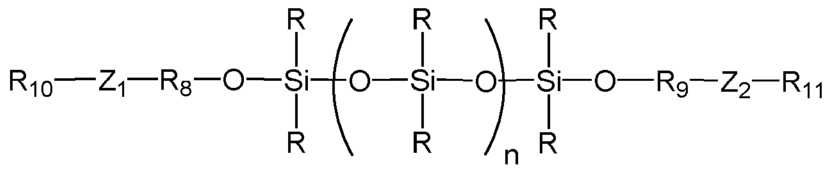

(VIII)

wherein:

each R and n are as defined herein;
$R_8$ and $R_9$ are independently a biradical selected from the group consisting of formula (IV'), formula (V'), formula (VI'), and formula (VII') as defined herein; wherein one of the ends of each biradical $R_8$ is attached to $Z_1$ in the polymer of formula (VIII) and the other end of the biradical $R_8$ is attached to the oxygen atom of the silicone-based moiety; and one of the ends of each biradical $R_9$ is attached to $Z_2$ in the polymer of formula (VIII) and the other end of the biradical $R_9$ is attached to the oxygen atom of the silicone-based moiety;
$Z_1$ and $Z_2$ are independently a biradical of formula (IX) or formula (X) as defined herein; and $R_{10}$ and $R_{11}$ are independently a radical of formula (II') or formula (III'):

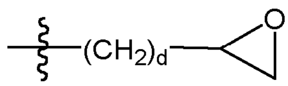

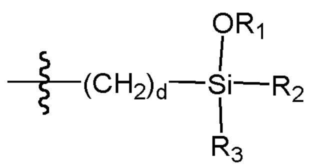

(II') (III')

wherein:

$R_1$ is H or ($C_1$-$C_6$)alkyl;
$R_2$ and $R_3$ are independently selected from the group consisting of H, -OH and -O-($C_1$-$C_6$)alkyl; and
each d is independently a value from 0 to 15.

In another embodiment, optionally in combination with any of the embodiments above or below, in the radical of formula (II') or formula (III'), d is independently a value from 0 to 15, more particularly from 1 to 10, even more particularly from 1 to 6. In another embodiment, d is 0, 1, 2, 3, 4, 5, 6, 7, 8, 9, 10, 11, 12, 13, 14 or 15.

More particularly, in the radical of formula (III') at least one of $R_2$ or $R_3$ is -OH or -O-($C_1$-$C_6$)alkyl, even more particularly, both $R_2$ and $R_3$ are -OH or -O-($C_1$-$C_6$)alkyl, even more particularly -$OR_1$, $R_2$ and $R_3$ are the same.

In another embodiment, optionally in combination with any of the embodiments above or below, in the water-soluble polymer of formula (VIII), $R_8$ and $R_9$ are the same, $Z_1$ and $Z_2$ are the same, and $R_{10}$ and $R_{11}$ are the same.

In another embodiment, optionally in combination with any of the embodiments above or below, in the water-soluble polymer of formula (VIII), $R_8$ and $R_9$ are a biradical of formula (IV'), $Z_1$ and $Z_2$ are a biradical of formula (IX), and $R_{10}$ and $R_{11}$ are a radical of formula (II').

Process for the preparation of the water-soluble polymer

A second aspect of the invention relates to a process for the preparation of the water-soluble polymer as defined herein, which comprises:

a) providing a silicone-based polymer comprising the repetitive unit of formula (I) as defined in herein, and one or more functional groups capable of forming one or more covalent bonds with a hydrophilic polymer moiety;
b) providing a hydrophilic polymer which comprises one or more functional groups capable of forming one or more covalent bonds with a silicone-based polymer, and one or more functional groups capable of forming one or more chemical bonds with a substrate; and
c) mixing the silicone-based polymer of step a) and the hydrophilic polymer of step b) in the presence of water until one or more covalent bonds between the silicone-based polymer of step a) and the hydrophilic polymer of step b) are formed.

In one embodiment, optionally in combination with any of the embodiments above or below, the silicone-based polymer of step a) has the formula (IA):

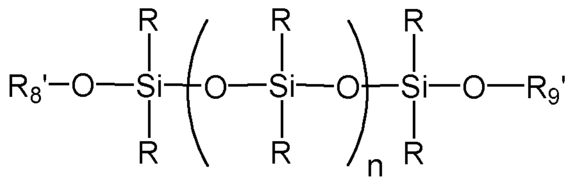

(IA)

wherein $R_8$' and $R_9$' are selected from the group consisting of a radical of formula (Ia), formula (IIa), and formula (IIIa):

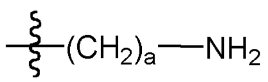

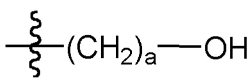

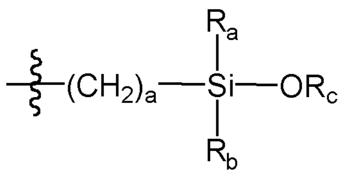

(Ia) (IIa) (IIIa)

wherein each a is a value independently selected from a 0 to 6, more particularly from 1 to 3; $R_c$ is H or -($C_1$-$C_6$)alkyl; and $R_a$ and $R_b$ are independently selected from the group consisting of H, -OH, and -O-($C_1$-$C_6$)alkyl. More particularly, in the radical of formula (IIIa) at least one of $R_a$ or $R_b$ is -OH or -O-($C_1$-$C_6$)alkyl, even more particularly, both $R_a$ and $R_b$ are -OH or -O-($C_1$-$C_6$)alkyl, even more particularly -$OR_c$, $R_a$ and $R_b$ are the same.

In another more particular embodiment, optionally in combination with any of the embodiments above or below, in the silicone-based polymer of formula (IA), each R is ($C_1$-$C_6$)alkyl, more particularly each R is methyl.

In another more particular embodiment, optionally in combination with any of the embodiments above or below, in the silicone-based polymer of formula (IA), n is a value from 1 to 200, more particularly from 1 to 150.

In another more particular embodiment, optionally in combination with any of the embodiments above or below, in the silicone-based polymer of formula (IA), $R_8$' and $R_9$' are different and selected from the group consisting of a radical of formula (Ia), formula (IIa), and formula (IIIa).

In another more particular embodiment, optionally in combination with any of the embodiments above or below, in the silicone-based polymer of formula (IA), $R_8$' and $R_9$' are the same and are selected from the group consisting of a radical of formula (Ia), formula (IIa), and formula (IIIa). More particularly, in the silicone-based polymer of formula (IA), $R_8$' and $R_9$' are the same and are a radical of formula (Ia), even more particularly wherein a is 3.

In another embodiment, optionally in combination with any of the embodiments above or below, the silicone-based polymer of formula (IA) is bis(3-aminopropyl)-terminated PDMS (CAS: 106214-84-0).

In another embodiment, optionally in combination with any of the embodiments above or below, the hydrophilic polymer of step b) comprises a poly($C_1$-$C_{20}$)alkylene glycol moiety, more particularly a polyethylene glycol moiety or a propylene glycol moiety; or a polyglycerol moiety.

In another more particular embodiment, optionally in combination with any of the embodiments above or below, the hydrophilic polymer of step b) has the formula (IXA) or the formula (XA):

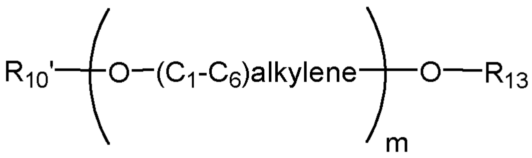

(IXA)

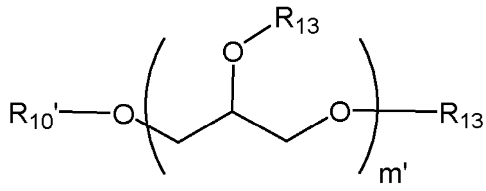

(XA)

wherein:

m is a value from 1 to 1000, more particularly from 2 to 10;
m' is a value from 1 to 100;
$R_{10}$' is selected from the group consisting of a radical of formula (Ib), formula (IIb), and formula (IIIb):

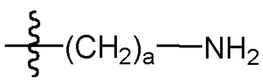

(Ib)

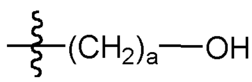

(IIb)

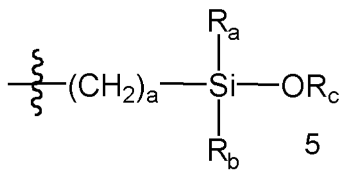

(IIIb)

wherein each a is a value independently selected from a 0 to 6 more particularly from 1 to 3; $R_c$ is H or -($C_1$-$C_6$)alkyl; and $R_a$ and $R_b$ are independently selected from the group consisting of H, -OH, and -O-($C_1$-$C_6$)alkyl. More particularly, in the radical of formula (IIIa) at least one of $R_a$ or $R_b$ is -OH or -O-($C_1$-$C_6$)alkyl, even more particularly, both $R_a$ and $R_b$ are -OH or -O-($C_1$-$C_6$)alkyl, even more particularly -O$R_c$, $R_a$ and $R_b$ are the same; and
$R_{13}$ is a radical of formula (II") or formula (III"):

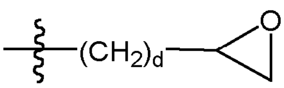

(II")

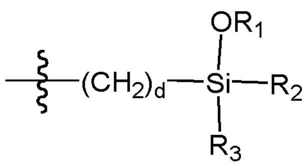

(III")

wherein $R_1$ is H or ($C_1$-$C_6$)alkyl; $R_2$ and $R_3$ are independently selected from the group consisting of H, -OH and -O-($C_1$-$C_6$)alkyl; and each d is independently a value from 0 to 15, more particularly from 1 to 10, even more particularly from 1 to 6, more particularly d is 1. More particularly, in the radical of formula (III") at least one of $R_2$ or $R_3$ is -OH or -O-($C_1$-$C_6$) alkyl, even more particularly, both $R_2$ and $R_3$ are -OH or -O-($C_1$-$C_6$)alkyl, even more particularly -O$R_1$, $R_2$ and $R_3$ are the same.

In another embodiment, optionally in combination with any of the embodiments above or below, the hydrophilic polymer moiety comprises a moiety of formula (IX). More particularly, the ($C_1$-$C_6$)alkylene is ethylene or propylene, even more particularly is ethylene.

In another embodiment, optionally in combination with any of the embodiments above or below, the hydrophilic polymer of formula (IXA) is poly(ethylene glycol) diglycidyl ether (PEGDGE, CAS: 26403-72-5).

In one embodiment, optionally in combination with any of the embodiments above or below, the silicone-based polymer of step a) and the hydrophilic polymer are mixed in a molar ratio from 1:1 to 200:1, more particularly from 2:1 to 25:1. In another embodiment, optionally in combination with any of the embodiments above or below, the silicone-based polymer of step a) and the hydrophilic polymer are mixed in a volume ratio about 2:1, about 3:1, about 4:1, about 6:1, about

7:1, about 10:1, about 14:1, about 21:1 or about 126:1.

In another embodiment, optionally in combination with any of the embodiments above or below, the silicone-based polymer of step a) has a viscosity from 1 to 3000 cSt, more particularly from 2 to 100 cSt. In another embodiment, optionally in combination with any of the embodiments above or below, the silicone-based polymer of step a) has a viscosity about 10-15 cSt or about 50-60 cSt.

The invention also relates to a water-soluble polymer as described in the first aspect, which is obtainable by the process of the second aspect of the invention.

All embodiments mentioned above for the water-polymer of the invention apply to the preparation process of the second aspect as well as to the water-polymer of the invention defined by its preparation process.

Composition

In the third aspect the invention relates to a composition comprising the water-soluble polymer as defined herein, and optionally one or more carriers or additives.

In one embodiment, optionally in combination with any of the embodiments above or below, the composition comprises or consists of the water-soluble polymer as defined herein and one or more carriers or additives.

The appropriate excipients and carriers and their amounts can readily be determined by those skilled in the art according to the type of composition being prepared. Non-limiting examples of additives include solvents, co-solvents, pigments, UV shielding agents, antimicrobial agents, mechanical enhanced additives, anti-fouling agents, wetting agents, thickening agents, hardening agents, toughening agents, plasticizers, stabilizers, and the like.

In one embodiment, optionally in combination with any of the embodiments above or below, the composition of the second aspect of the invention is forming part of a painting composition, and varnishing composition.

In one embodiment, optionally in combination with any of the embodiments above or below, the composition has a static contact angle of water from 50° to 120°, more particularly from 99° to 105°, as measured by the Laplace-Young fitting method when applied to a substrate.

In another embodiment, optionally in combination with any of the embodiments above or below, the composition has a static contact angle of hexadecane from 10° to 45°, more particularly from 35° to 40°, as measured by the Laplace-Young fitting method when applied to a substrate.

In one embodiment, optionally in combination with any of the embodiments above or below, the composition has a sliding angle of water from 0° to 55°, more particularly from 30° to 50°, as measured by tilting plate direct method when applied to a substrate.

In another embodiment, optionally in combination with any of the embodiments above or below, the composition has a sliding angle of hexadecane from 0° to 6°, more particularly from 1° to 3°, as measured by tilting plate direct method when applied to a substrate.

In one embodiment, optionally in combination with any of the embodiments above or below, the composition has a surface free energy from 15 to 25 mN/m, more particularly from 19 to 23 mN/m, as measured by the Fowkes model when applied to a substrate.

One of the most demanded requirements for practical application of coatings is their mechanical resistance. In one embodiment, optionally in combination with any of the embodiments above or below, the composition has a static contact angle of water as measured by the Laplace-Young fitting method which is maintained before and after 100 abrasion cycles when applied to a substrate.

The invention also relates to a process for the preparation of the composition as defined in the third aspect which comprises:

a) providing a silicone-based polymer comprising the repetitive unit of formula (I) as defined in herein, and one or more functional groups capable of forming one or more covalent bonds with a hydrophilic polymer moiety;
b) providing a hydrophilic polymer which comprises one or more functional groups capable of forming one or more covalent bonds with a silicone-based polymer, and one or more functional groups capable of forming one or more chemical bonds with a substrate; and
c) mixing the silicone-based polymer of step a) and the hydrophilic polymer of step b) in the presence of water until one or more covalent bonds between the silicone-based polymer of step a) and the hydrophilic polymer of step b) are formed; and
d) optionally adding one or more carriers or additives.

The invention also relates to a composition as described in the third aspect, which is obtainable by the process as defined above comprising steps a) to d).

When the molar amount of the hydrophilic polymer is about twice the molar amount of the silicone-based polymer, then a water-polymer may be formed which comprises a silicone-based moiety between two hydrophilic polymer moieties.

When the molar amount of the hydrophilic polymer is higher than twice the molar amount of the silicone-based polymer, then the composition may comprise the water-polymer which comprises the silicone-based moiety between two hydrophilic polymer moieties, and free unreacted hydrophilic polymer.

Thus, in one embodiment, optionally in combination with any of the embodiments above or below, the composition comprises the water-soluble polymer as defined in the first aspect, a hydrophilic polymer comprising one or more functional groups capable of forming one or more chemical bonds with a substrate, and optionally one or more carriers or additives. In a more particular embodiment, optionally in combination with any of the embodiments above or below, the hydrophilic polymer comprising one or more functional groups capable of forming one or more chemical bonds with a substrate is the same that has been used for the preparation of the water-soluble polymer, for example poly(ethylene glycol) diglycidyl ether (PEGDGE, CAS: 26403-72-5).

All embodiments mentioned above for the water-polymer of the invention apply to the composition and all embodiments mentioned above for the process for the preparation of the water-polymer of the invention apply to the process for the preparation of the composition.

Process for coating a substrate

As mentioned above, a fourth aspect of the invention relates to the use of the composition as defined herein for coating a substrate, in particular for coating at least part of the surface of the substrate. A fifth aspect of the invention relates to a process for coating a substrate which comprises applying the composition as defined herein to at least part of a substrate.

Non-limiting examples of substrates which can be coated with the compositions of the invention include for example glass, metal, alloy, synthetic polymer, natural polymer, ceramic, or the like.

In one embodiment, optionally in combination with any of the embodiments above or below, the process for coating a substrate comprises:

a) immersing the substrate into an aqueous solution of a water-soluble polymer as defined herein, whereby in particular a film over at least part of the surface of the substrate is formed;
b) removing the coated substrate from the solution; and
c) curing the coated substrate.

Optionally, prior to step a) the substrate may be cleaned, and/or activated.

Typically, cleaning may comprise a washing step using soap and rinsing the substrate with thoroughly water. Additionally, substrates may be immersed once or successively in a solvent or a mixture of solvents such as water, isopropanol, acetone, or mixtures thereof, in particular under sonication. Activation of the substrate is used with the aim to generate hydroxyl groups in the substrate surface prone to promote chemical bonds between the surface and the reacting groups (e.g. silanol groups) present in the inorganic or organic compound. Activation may be carried out by immersing a substrate, in particular a cleaned substrate, in 10 wt. % NaOH aqueous solution in the case of glass or by treating it with oxygen plasma in the case of PC or PVC.

Thus, in a particular embodiment, the invention relates to a process for coating at least part of the surface of a substrate, which comprises:

i) optionally cleaning the substrate as defined above;
ii) optionally activating the substrate as defined above;
iii) immersing the substrate into an aqueous solution of water-soluble polymer as defined herein, whereby in particular a film over at least part of the surface of the substrate is formed;
iv) removing the coated substrate from the solution;
v) optionally drying the substrate; and
vi) optionally curing the coated substrate.

In one embodiment, optionally in combination with any of the embodiments above or below, step a) or iii) is performed for a period of time from 1 to 30 min.

In another embodiment, optionally in combination with any of the embodiments above or below, the process comprises step c) or vi) of curing the coated substrate. More particularly, this step is performed at a temperature from 80 to 150 °C, particularly for a period of time from 5 to 240min.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and

drawings are provided by way of illustration, and they are not intended to be limiting of the present invention. Furthermore, the present invention covers all possible combinations of particular and preferred embodiments described herein.

## Examples

### Coating fabrication

### Surface pretreatment

Prior to the coating deposition, glass substrates were cleaned and activated. The cleaning process involved a washing step with soap and thoroughly rinsing with water. After that the samples were immersed into deionized water, isopropanol, and acetone successively under sonication for 5 min each. With the aim to generate hydroxyl groups at the surface prone to promote covalent bonds epoxy functional groups of the coating molecules, the cleaned substrates were activated using an oxygen plasma (RF signal generator 40 kHz, 200 W) during 5 min at 90% power.

### Preparation of the waterborne coating solution

Waterborne solutions containing different ratios of PEGDGE (CAS: 26403-72-5) (1.5 mL) and bis(3-aminopropyl)-terminated PDMS (CAS: 106214-84-0, also designated herein as $NH_2$-PDMS-$NH_2$) (0.5 mL, 1 mL, 0.75 mL and 1.5 mL) and distilled water (10 mL) were prepared. Also, $NH_2$-PDMS-$NH_2$ polymers with various viscosities were used.

After bis(3-aminopropyl)-terminated PDMS addition, the solutions became cloudy and were left stirring at 50 °C for 1 h. The cloudy dispersions were then filtered. Finally, the filtered liquids were used for the preparation of the coating.

### Preparation of the coatings

The coating was prepared by immersion of a glass into one of the waterborne PEGDGE-PDMS solutions obtained as described above for 5 minutes. The substrates were then cleaned with water and ethanol. After that, a thermal curing process was performed for 30 minutes at 130 °C.

### Characterization techniques

The wetting properties of the resulting coatings were characterized in terms of static contact angles (CAs) and sliding angles using water and hexadecane as liquid probes. In addition, the surface free energy of the coatings was determined. Fourier-transform infrared (FTIR) spectra of the solutions were analyzed using an FTIR spectrometer (JASCO) using attenuated total reflection (ATR) method. The spectra were recorded in the range of 4000-400 $cm^{-1}$ at a resolution of 4 $cm^{-1}$, and each sample was scanned 64 times. The films' surface obtained at different immersion times was evaluated by atomic force microscopy (AFM). Resistance against abrasion and anti-graffiti ability was also evaluated (glass substrates).

Attension Theta Lite Optical tensiometers were used to determine the static contact angles and the surface free energy (SFE) of the films. Solvent droplets were placed at a minimum of three different areas of each surface. The static contact angles were recorded using the Laplace-Young fitting method. SFE of coatings was calculated according to the Fowkes model using water and ethylene glycol as polar liquids and diiodomethane as non-polar liquid.

### Wetting properties

The formulations with different v/v ratios of PEGDGE-PDMS precursors were evaluated by wettability measurements in comparison to PEGDGE coating. Another important parameter, directly related to the interaction of a surface with a liquid, is the surface free energy (SFE). The SFE of the developed coating was also evaluated.

In the tables below the wetting properties of the different coatings are shown:

| PEGDGE/NH2-PDMS-NH2 (10-15 cSt) | Molar ratio PEGDGE: NH2-PDMS-NH2 | Static Contact Angles | | Sliding Angles | | SFE |
|---|---|---|---|---|---|---|
| | | CA $_{H2O}$ (°) | CA $_{C16H34}$ (°) | SA $_{H2O}$ (°) | SA $_{C16H34}$ (°) | mN/m] |
| 1.5 mL PEGDGE/1 mL NH2-PDMS-NH2 10-15 cSt | 3:1 | 97 ± 2 | 39 ± 2 | ----- | 5 ± 1 | 23 ± 1 |

(continued)

| PEGDGE/NH2-PDMS-NH2 (10-15 cSt) | Molar ratio PEGDGE: NH2-PDMS-NH2 | Static Contact Angles | | Sliding Angles | | SFE |
|---|---|---|---|---|---|---|
| | | CA $_{H2O}$ (°) | CA $_{C16H34}$ (°) | SA $_{H2O}$ (°) | SA $_{C16H34}$ (°) | mN/m] |
| 1.5 mL PEGDGE/1.5 mL NH2-PDMS-NH2 10-15 cSt | 2:1 | 100 ± 2 | 39 ± 1 | ----- | 6 ± 1 | 22 ± 1 |
| 1.5 mL PEGDGE/0.75 mL NH2-PDMS-NH2 10-15 cSt | 4:1 | 99 ± 2 | 39 ± 1 | ----- | 6 ± 2 | 23 ±0.5 |
| 1.5 mL PEGDGE/0.5 mL NH2-PDMS-NH2 10-15 cSt | 6:1 | 93 ± 2 | 38 ± 2 | ----- | 4 ± 1 | 25 ± 1 |

| PEGDGE/NH2-PDMS-NH2 (50-60 cSt) | Molar ratio PEGDGE: NH2-PDMS-NH2 | Static Contact Angles | | Sliding Angles | | SFE |
|---|---|---|---|---|---|---|
| | | CA $_{H2O}$ (°) | CA $_{C16H34}$ (°) | SA $_{H2O}$ (°) | SA $_{C16H34}$ (°) | [mN/m] |
| 1.5 mL PEGDGE/1 mL NH2-PDMS-NH2 50-60 cSt | 10:1 | 104 ± 1 | 37 ± 1 | ----- | 3 ± 3 | 19 ± 1 |
| 1.5 mL PEGDGE/1.5 mL NH2-PDMS-NH2 50-60 cSt | 7:1 | 99 ± 3 | 35 ± 1 | 41 ± 11 | 4 ± 0.5 | 22 ± 1 |
| 1.5 mL PEGDGE/0.75 mL NH2-PDMS-NH2 50-60 cSt | 14:1 | 103 ± 1 | 35 ± 1 | ----- | 5 ± 1 | 19 ± 1 |
| 1.5 mL PEGDGE/0.5 mL NH2-PDMS-NH2 50-60 cSt | 21:1 | 101 ± 1 | 36 ± 1 | 52 ± 4 | 4 ± 1 | 20 ± 1 |
| 3 mL PEGDGE/0.5 mL NH2-PDMS-NH2 Mn 27000 | 14:1 | 109 ± 1 | 40 ± 1 | ----- | 3 ± 1 | 19 ± 1 |
| 3 mL PEGDGE/0.5 mL NH2-PDMS-NH2 Mn 27000 (after filtering dissolution) | 21:1 | 108 ± 1 | 36 ± 1 | 30 ± 4 | 3 ± 1 | 20 ± 2 |

| PEGDGE Mn 500 | Static Contact Angles | | Sliding Angles | | SFE |
|---|---|---|---|---|---|
| | CA $_{H2O}$ (°) | CA $_{C16H34}$ (°) | SA $_{H2O}$ (°) | SA $_{C16H34}$ (°) | [mN/m] |
| PEGDGE Mn 500 | 72 ± 4 | <10 | ----- | ----- | 44 ± 1 |

The results obtained reveal that the coating developed with the longer chain of $NH_2$-PDMS-$NH_2$ showed the best wetting properties. Very low values of hexadecane sliding angles were obtained for all studied coatings.

These results demonstrate the easy-to-clean properties of the coatings. It can be concluded that the addition of PEGDGE on the cross-linking of PDMS did not deteriorate such properties of the material and resulted in a surface that exhibited the typical properties of PDMS coatings.

AFM Analysis

The nanotexture analysis was performed using an Atomic Force Microscope (AFM). Topography images were taken in contact mode. A triangular silicon nitride NP cantilever (MFP3D- Origin) was used for contact mode images.

The morphology of a PEGDGE-PDM (1.5 mL PEGDGE/0.5 mL $NH_2$-PDMS-$NH_2$ 50-60 cSt) coating obtained at different immersion times in water (5 min, 30 min, and 210 min) was studied by AFM.

AFM images revealed that at longer immersion times the coating leads to a reduction of the surface defects (pinholes in the coating). Further, it was observed that the coating at longer immersion times does not alter the aesthetic properties of the substrate.

The resulting coatings have been characterised in terms of static contact angles (water and hexadecane, $C_{16}H_{34}$) to determine whether immersion time alters the wetting properties of the coatings. The results are shown in the table below:

| Sample | Static Contact Angles | |
|---|---|---|
| | CA $_{H2O}$ (°) | CA $_{C16H34}$ (°) |
| **$H_2O$** | 103 ± 1 | 38 ± 1 |
| **5 min/15 min 130 °C** | 94 ± 4<br>99 ± 4 | 37 ± 4<br>37 ± 3 |
| **$H_2O$ 30 min/15 min 130 °C** | 93 ± 2<br>94 ± 1<br>95 ± 2 | 38 ± 1<br>37 ± 2<br>38 ± 1 |
| **$H_2O$ 3 h 30 min/15 min 130 °C** | 104 ± 1<br>104 ± 1<br>104 ± 2 | 38 ± 1<br>39 ± 1<br>37 ± 3 |

The contact angles showed that the wetting properties at short immersion times were similar to those obtained at longer immersion times. Thus, the immersion time of the layers was set at 5 minutes for the rest of the tests.

FTIR Analysis

The chemical structures of the waterborne solution are investigated by FTIR spectroscopy. To verify that the epoxy ring opening reaction of the PEGDGE occurred and that it has reacted with the $NH_2$ end-groups of PDMS, facilitating its solubility in water Fourier transform infrared spectroscopy (FTIR) measurements of the solutions were performed using the attenuated total reflectance measurement (ATR). Spectra were recorded in the 4000-400 $cm^{-1}$ range with a resolution of 4 $cm^{-1}$, and each sample was scanned 64 times.

FIG. 1 shows the FTIR spectrum of PEGDGE-PDMS (1.5 mL PEGDGE/0.5 mL $NH_2$-PDMS-$NH_2$ 50-60 cSt) in solution. The appearance of two new bands in PEGDGE-PDMS at 3442 $cm^{-1}$ and 1736 $cm^{-1}$, which can be assigned to bending and stretching vibrations of NH bonds, indicate that the reaction of epoxy ring and $NH_2$ from PDMS occurred.

Coating performance

Abrasion test (glass)

Evaluation of the mechanical robustness of the developed coating was performed by rub abrasion essays. The abrasion resistance of the developed water-based fluorine-free coatings was also evaluated. Abrasion resistance is measured by moving a PEGDGE-PDMS (1.5 mL PEGDGE/0.5 mL $NH_2$-PDMS-$NH_2$ 50-60 cSt) coating across the surface of an abrasive sheet mounted on a revolving drum. Differences in contact angle values of less than 10° are not considered significant, so the acceptance criterion was set at a difference in CA values of less than 10 ° before and after testing. In the table below the contact angles in water (CA $H_2O$) and hexadecane (CA $C_{16}H_{34}$) for the PEGDGE-PDMS (1.5 mL PEGDGE/0.5 mL $NH_2$-PDMS-$NH_2$ 50-60 cSt) coating before and after mechanical abrasion cycles are shown:

| Abrasion (2.62 KPa) | | |
|---|---|---|
| **Number of cycles** | **Static Contact Angles** | |
| | **CA $H_2O$ (°)** | **CA $_{C16H34}$ (°)** |
| 0 cycles | 97 ± 4 | 33 ± 1 |
| 5 cycles | 99 ± 4 | 34 ± 2 |
| 25 cycles | 99 ± 2 | 36 ± 2 |
| 50 cycles | 99 ±2 | 37 ± 1 |
| 100 cycles | 97 ± 3 | 38 ± 1 |

The wettability properties evaluated reveal that, after 100 cycles applying a pressure of 2.62 kPa, the contact angle values remain constant with respect to those obtained before the start of the test, demonstrating the mechanical

robustness of the coating.

Anti-graffiti (glass)

48 hours after graffiti paint application, a TESA 4651-yellow tape was applied over graffiti and pulled immediately with constant force. The ability of the coating to minimize the adhesion of a typical graffiti paint was evaluated, demonstrating easy release properties, as can be seen in FIG. 3.

UV test (glass)

To evaluate the UV resistance of the coating, wetting properties were determined (static and dynamic contact angles) before and after the accelerated aging test (ISO 16474-2). Differences in contact angle values of less than 10° are not considered significant, so the acceptance criterion was set at a difference in CA values of less than 10 ° before and after testing. In the table below the contact angles in water (CA $H_2O$) and hexadecane (CA $C_{16}H_{34}$) for the PEGDGE-PDMS (1.5 mL PEGDGE/0.5 mL $NH_2$-PDMS-$NH_2$ 50-60 cSt) coating before and after the UV test are shown:

| | Initial | | 139h | | 180h | | 300h | |
|---|---|---|---|---|---|---|---|---|
| | WCA (°) | HCA (°) | WCA (°) | HCA (°) | WCA (°) | HCA (°) | WCA (°) | HCA (°) |
| **1.5 mL PEGDGE/0.5 mL NH2-PDMS-NH2 50-60 cSt** | 106± 1 | 36± 2 | 105± 3 | 35± 1 | 103± 4 | 36± 1 | 98± 4 | 35±1 |

The wettability properties evaluated (contact angle to water and hexadecane) revealed that some of the water-based coatings developed after 300 h of exposure to UV radiation showed similar values to those obtained before starting the ageing test.

**Citation List**

- Hoorfar, M. et al., "Recent progress in axisymmetric drop shape analysis (ADSA)", Advances in colloid and interface science 2006, 121(1-3), 25-49
- Huhtam6ki, T. et al. "Surface-wetting characterization using contact-angle measurements." Nature protocols 2018, 13.7: 1521-1538.


**Claims**

1. A water-soluble polymer suitable for coating a substrate which comprises:

i) a silicone-based moiety comprising a repetitive unit of formula (I)

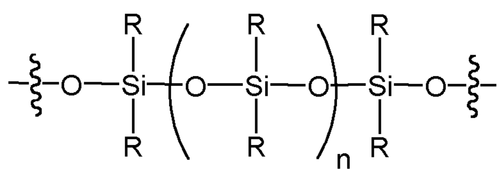

(I)

wherein each R is independently ($C_1$-$C_{30}$)alkyl or ($C_3$-$C_{10}$)cycloalkyl; and n is a value from 1 to 200; and
ii) a hydrophilic polymer moiety which comprises one or more functional groups capable of forming one or more chemical bonds with a substrate;

wherein the silicone-based moiety and the hydrophilic polymer moiety are covalently attached.

**2.** The water-soluble polymer according claim 1, wherein the hydrophilic polymer moiety comprises a poly($C_1$-$C_{20}$) alkylene glycol moiety or a polyglycerol moiety.

**3.** The water-soluble polymer according to any of the claims 1-2, wherein in the silicone-based moiety of formula (I) each R is ($C_1$-$C_6$)alkyl.

**4.** The water-soluble polymer according to any of the claims 1-3, wherein the one or more functional groups capable of forming one or more chemical bonds with a substrate are independently selected from the group consisting of a radical of formula (II) and a radical of formula (III):

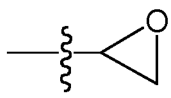

(II)

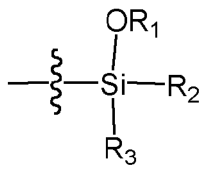

(III)

wherein $R_1$ is H or ($C_1$-$C_6$)alkyl; $R_2$ and $R_3$ are independently selected from the group consisting of H, -OH and -O-($C_1$-$C_6$)alkyl; and wherein the one or more functional groups capable of forming one or more chemical bonds with a substrate are attached to the hydrophilic polymer moiety either directly by a bond or through a ($C_1$-$C_{15}$)alkylene group.

**5.** The water-soluble polymer according to claim 4, wherein the one or more functional groups capable of forming one or more chemical bonds with a substrate are attached to the hydrophilic polymer moiety through a ($C_1$-$C_{10}$)alkylene group.

**6.** The water-soluble polymer according to any of the claims 1-5, wherein the hydrophilic polymer moiety and the silicone-based moiety are covalently attached through one or more biradicals selected from the group consisting of formula (IV), formula (V), formula (VI), formula (VII) and a combination thereof:

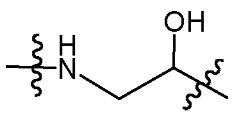

(IV)

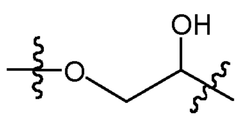

(V)

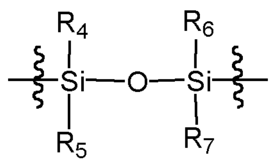

(VI)

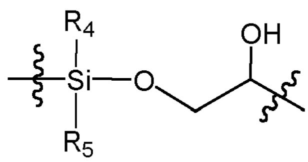

(VII)

wherein each $R_4$ and $R_5$, $R_6$ and $R_7$ are independently selected from the group consisting of H, -OH and -O-($C_1$-$C_6$) alkyl; and wherein one of the ends of each biradical is attached to the hydrophilic polymer moiety, and the other end of the biradical is attached to the silicone-based moiety; and each biradical is attached to the hydrophilic polymer moiety or the silicone-based moiety either directly by a bond or through a ($C_1$-$C_6$)alkylene group.

**7.** The water-soluble polymer according to claim 6, wherein each biradical selected from the group consisting of formula (IV), formula (V), formula (VI), and formula (VII) is attached to the hydrophilic polymer moiety by one of its ends through a ($C_1$-$C_6$)alkylene group, and is attached to the silicone-based moiety by the other of its ends through a ($C_1$-$C_6$) alkylene group.

**8.** The water-soluble polymer according to claim 1, which has the formula (VIII)

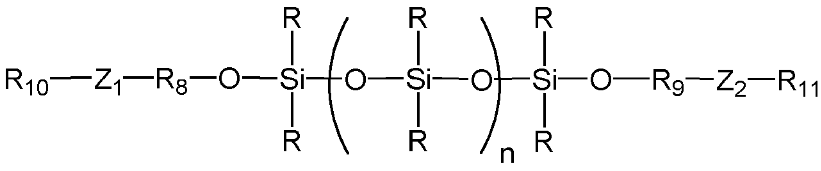

(VIII)

wherein:

each R is independently $(C_1-C_{30})$alkyl or $(C_3-C_{10})$cycloalkyl;
n is a value from 1 to 200; and
$R_8$ and $R_9$ are independently a biradical selected from the group consisting of formula (IV'), formula (V'), formula (VI'), and formula (VII'):

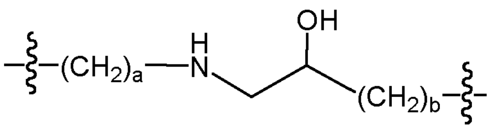

(IV')

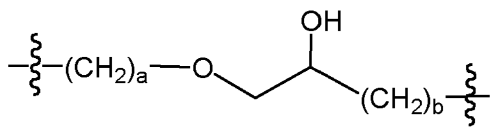

(V')

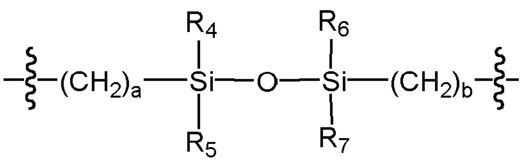

(VI')

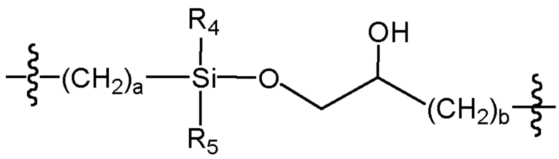

(VII')

wherein:

each $R_4$ and $R_5$, $R_6$ and $R_7$ are independently selected from the group consisting of H, -OH and -O-$(C_1-C_6)$ alkyl; and
each a and b are independently a value from 0 to 6; and
wherein one of the ends of each biradical $R_8$ is attached to $Z_1$ in the polymer of formula (VIII) and the other end of the biradical $R_8$ is attached to the oxygen atom of the silicone-based moiety; and one of the ends of each biradical $R_9$ is attached to $Z_2$ in the polymer of formula (VIII) and the other end of the biradical $R_9$ is attached to the oxygen atom of the silicone-based moiety;

$Z_1$ and $Z_2$ are independently a biradical of formula (IX) or formula (X):

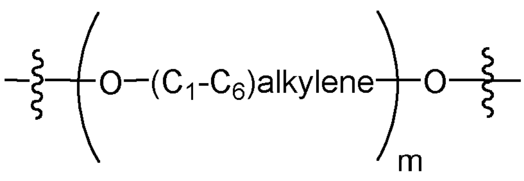

(IX)

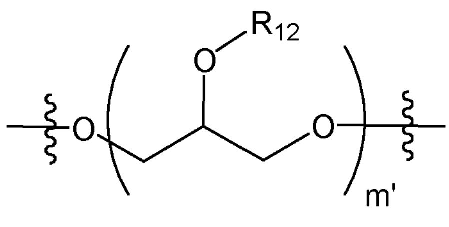

(X)

wherein:

m is a value from 1 to 1000;
m' is a value from 1 to 100; and
$R_{12}$ is a radical of formula (II') or formula (III'), and

$R_{10}$ and $R_{11}$ are independently a radical of formula (II') or formula (III'):

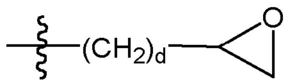

(II')

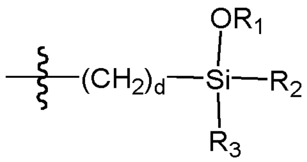

(III')

wherein:

$R_1$ is H or $(C_1\text{-}C_6)$alkyl;
$R_2$ and $R_3$ are independently selected from the group consisting of H, -OH and $\text{-O-}(C_{1\text{-}}C_6)$alkyl; and
each d is independently a value from 0 to 15.

**9.** The water-soluble polymer according to claim 8, wherein $R_8$ and $R_9$ are the same, $Z_1$ and $Z_2$ are the same, and $R_{10}$ and $R_{11}$ are the same.

**10.** The water-soluble polymer according to claim 9, wherein $R_8$ and $R_9$ are a biradical of formula (IV'), $Z_1$ and $Z_2$ are a biradical of formula (IX), and $R_{10}$ and $R_{11}$ are a radical of formula (II').

**11.** A process for the preparation of the water-soluble polymer according to any of the claims 1-10, which comprises:

a) providing a silicone-based polymer comprising the repetitive unit of formula (I) as defined in claim 1, and one or more functional groups capable of forming one or more covalent bonds with a hydrophilic polymer;
b) providing a hydrophilic polymer which comprises one or more functional groups capable of forming one or more covalent bonds with a silicone-based polymer, and one or more functional groups capable of forming one or more chemical bonds with a substrate; and
c) mixing the silicone-based polymer of step a) and the hydrophilic polymer of step b) in the presence of water until one or more covalent bonds between the silicone-based polymer of step a) and the hydrophilic polymer of step b) are formed.

**12.** A composition comprising the water-soluble polymer as defined in any of the claims 1-10, and optionally one or more carriers or additives.

**13.** Use of the composition as defined in claim 12 for coating at least part of a substrate.

**14.** A process for coating a substrate which comprises applying the composition as defined in claim 12 to at least part of a substrate.

**15.** A substrate coated with the composition as defined in claim 12.

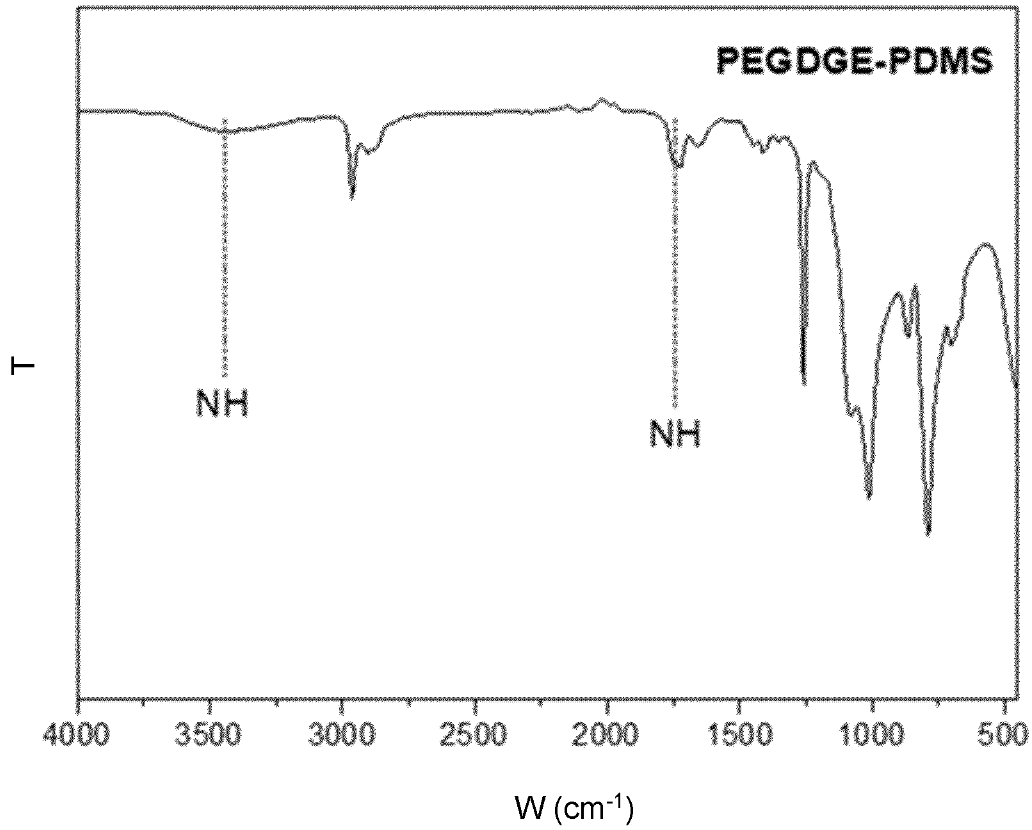
PEGDGE-PDMS
T
NH
NH
4000
3500
3000
2500
2000
1500
1000
500
W (cm-1)

FIG. 1

Europäisches Patentamt
European Patent Office
Office européen des brevets

# EUROPEAN SEARCH REPORT

Application Number
EP 24 38 3436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2021/292484 A1 (GUTACKER ANDREA [DE] ET AL) 23 September 2021 (2021-09-23)<br>* claims 1-15 *<br>* examples 1-3 * | 1-3,5, 11-15<br>6-10 | INV.<br>C08G65/336<br>C08G77/38<br>C08G77/46<br>C09D171/02<br>C09D183/12 |
| X<br>A | US 2021/246270 A1 (PARK JONG GU [SG] ET AL) 12 August 2021 (2021-08-12)<br>* claims 1-18 *<br>* schemes 7, 9, 10 *<br>* examples 1-7 * | 1-3,5, 11-15<br>6-10 | |
| X<br>A | US 12 018 172 B2 (ADAPTIVE SURFACE TECH INC [US]) 25 June 2024 (2024-06-25)<br>* claims 1-18 *<br>* (Aspects 150-155) *<br>* formula AM-14, AM-30 * | 1-5, 11-15<br>6-10 | |
| | | | TECHNICAL FIELDS SEARCHED (IPC) |
| | | | C08G<br>C09D |

The present search report has been drawn up for all claims

1

| Place of search | Date of completion of the search | Examiner |
|---|---|---|
| The Hague | 3 June 2025 | Mensah, Laure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 38 3436

This annex lists the patent family members relating to the patent documents cited in the above-mentioned European search report. The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| US 2021292484 A1 | 23-09-2021 | EP 3663372 A1 | 10-06-2020 |
| | | ES 2977551 T3 | 26-08-2024 |
| | | PL 3663372 T3 | 01-07-2024 |
| | | US 2021292484 A1 | 23-09-2021 |
| | | WO 2020114771 A1 | 11-06-2020 |
| US 2021246270 A1 | 12-08-2021 | EP 4097155 A1 | 07-12-2022 |
| | | TW 202142576 A | 16-11-2021 |
| | | US 2021246270 A1 | 12-08-2021 |
| | | US 2023212357 A1 | 06-07-2023 |
| | | US 2023227613 A1 | 20-07-2023 |
| | | WO 2021154692 A1 | 05-08-2021 |
| US 12018172 B2 | 25-06-2024 | EP 3801446 A1 | 14-04-2021 |
| | | US 2021253902 A1 | 19-08-2021 |
| | | US 2022380627 A1 | 01-12-2022 |
| | | WO 2019237093 A1 | 12-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HOORFAR, M. et al.** *Advances in colloid and interface science*, 2006
- **HUHTAM6KI, T. et al.** *Nature protocols*, 2018
- *CHEMICAL ABSTRACTS*, 26403-72-5
- *CHEMICAL ABSTRACTS*, 106214-84-0
- **HOORFAR, M. et al.** Recent progress in axisymmetric drop shape analysis (ADSA). *Advances in colloid and interface science*, 2006, vol. 121 (1-3), 25-49
- **HUHTAM6KI, T. et al.** Surface-wetting characterization using contact-angle measurements. *Nature protocols*, 2018, vol. 13 (7), 1521-1538